# EUROPÄISCHE PATENTSCHRIFT

(11) **EP 3 017 678 B1**
(45) Veröffentlichungstag und Bekanntmachung des Hinweises auf die Patenterteilung: **14.08.2019**
(21) Anmeldenummer: 15401107.6
(22) Anmeldetag: 30.10.2015
(51) Int. Cl.: A01C 21/00, A01C 17/00

(54) **VERFAHREN UND VORRICHTUNG ZUR BERECHNUNG VON EINSTELLPARAMETERN EINES SCHLEUDERSTREUERS**
METHOD AND DEVICE FOR CALCULATING ADJUSTING PARAMETERS OF A CENTRIFUGAL SPREADER
PROCÉDÉ ET DISPOSITIF DE CALCUL DE PARAMÈTRES DE RÉGLAGE D'UN ÉPANDEUR D'ENGRAIS

(30) Priorität: 04.11.2014 DE 102014116019
(43) Veröffentlichungstag der Anmeldung: 11.05.2016
(73) Patentinhaber: Amazonen-Werke H. Dreyer GmbH & Co. KG, 49205 Hasbergen (DE)
(72) Erfinder: RAHE, Florian, 49504 Lotte (DE); WESSELS, Thomas, 49080 Osnabrück (DE); STRÖBEL-FRÖSCHLE, Markus, 49124 Georgsmarienhütte (DE)

(56) Entgegenhaltungen:
- EP-A1- 2 756 745
- EP-A2- 0 303 325
- EP-A2- 2 777 376

## Beschreibung

Die Erfindung betrifft ein Verfahren zur Berechnung von Einstellparametern eines Schleuderstreuer gemäß dem Oberbegriff des Patentanspruches 1 sowie eine Vorrichtung zur Einstellung eines solchen Schleudestreuers gemäß dem unabhängigen Patentanspruch 8.

Schleuderstreuer, im Allgemeinen ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels den auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:
- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung des Streugutes.
- Die Beschaffenheit des Streugutes (Korngröße, Korngeometrie und Dichte) beeinflusst die Abwurfgeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar ist. Vielmehr können inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2).

Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218T2, DE 197 23 359 A1, EP 2 777 376 A2).

Da für die Einhaltung vorgegebener Sollwerte für Wurfweite und Wurfwinkel bzw. entsprechend Arbeitsbreite eine Fülle von Parametern angepasst werden müssen, müssen entsprechende Messungen als Basis obiger Tabellen, Formeln und/oder Graphen für das betreffende Streugut für alle möglichen Werte der entsprechenden Parameter durchgeführt werden, was überaus zeitintensiv ist.

Aufgabe der vorliegenden Erfindung ist es entsprechend, eine Vereinfachung der Schleuderstreuereinstellung zu ermöglichen.

Dies wird durch ein Verfahren zur Berechnung von zumindest einem Einstellparameter eines Schleuderstreuers gemäß dem Anspruch 1 erreicht, wobei der zumindest eine Einstellparameter aus einer universellen das Streugut zumindest teilweise charakterisierenden und für beliebige Streugüter bestimmbaren Größe berechnet wird. Auf diese Weise kann auf Grund der universellen das Streugut bestimmbaren Größe eine Einstellung des Schleuderstreuers erfolgen und insbesondere bei Kenntnis dieser Größe für ein konkretes Streugut durch Vergleich mit anderen Streugütern der zumindest eine Einstellparameter ohne zeitraubende Messung des Einstellparameters für die vorgegebenen Sollwerte, vorzugsweise mittlere Wurfweite oder mittleren horizontalen Abwurfwinkel oder entsprechende Graphen und/oder Formeln eingestellt werden. Hierbei wird zumindest eine der das Streugut charakterisierenden Größen, welche für die Berechnung der Einstellparameter des Schleuderstreuers für die gewünschte Arbeitsbreite verwendet wird, durch geeignete Messung einer oder mehrerer das Flugverhalten des Streugutes charakterisierende Größen mit Hilfe einer geeigneten Messvorschrift, welche mittels geeigneter Mittel am Schleuderstreuer selbst oder einer am Schleuderstreuer angeordneten Einrichtung durchgeführt wird, bestimmt. Hierdurch kann in vorteilhafter Weise bei unbekannten Düngereigenschaften eine automatische Einstellung des Schleuderstreuers realisiert werden.

In einer vorteilhaften Ausgestaltung der Erfindung wird die zu verwendende Schleuderscheibenart sowie Scheibendrehzahl aus einer die Flugeigenschaft des Streugutes charakterisierenden Größe berechnet. Auf diese Weise kann anhand einer einzigen Größe, welche physikalische Eigenschaften des Streugutes, wie vorzugsweise Dichte und/oder mittlere Korngröße und/oder Korngeometrie und/oder cw-Wert, widerspiegelt und die Flugeigenschaften des Streugutes beschreibt eine Einstellung der die Wurfweite des Streugutes definierenden Einstellparameter, wie Schleuderscheibendrehzahl und/oder Schleuderscheibenart und/oder Wurschaufelgeometrie vorgenommen werden.

In einer vorteilhaften Weiterbildung der Erfindung fließen Randbedingungen, wie vorzugsweise die gewünschte Arbeitsbreite und/oder die Wurfweite, in die Berechnung ein. Hierdurch kann in vorteilhafter Weise das gewünschte Streubild und hierbei insbesondere der mittlere horizontale Abwurfwinkel und damit die Arbeitsbreite und/oder die Wurfweite mittels Einstellung des zumindest einen Einstellparameters lediglich anhand der charakterisierenden Größe berechnet.

In einer weiteren Ausgestaltung der Erfindung wird für einen Schleuderstreuer, welcher eine Verstellmöglichkeit des Aufgabepunktes des Streugutes auf die Schleuderscheibe vorsieht, der Aufgabepunkt des Streugutes auf die Schleuderscheibe aus einer die Rutscheigenschaften des Streugutes charakterisierenden Größe berechnet. Auf diese Weise kann die Einstellung des Aufgabepunktes auf eine einzige, den Dünger zumindest teilweise charakterisierende Größe basierend auf physikalischen Eigenschaften des Düngers, wie beispielsweise Korngröße und/oder Korngeometrie und/oder Rauigkeit, zurückgeführt werden.

In einer vorteilhaften Weiterbildung der Erfindung wird zumindest eine der das Streugut charakterisierenden Größen, welche für die Berechnung der Einstellparameter des Schleuderstreuers für die gewünschte Arbeitsbreite benötigt wird, durch geeignete Messung einer oder mehrerer das Rutschverhalten des Streugutes charakterisierende Größen mit Hilfe einer geeigneten Messvorschrift, welche mittels geeigneter Mittel am Schleuderstreuer selbst oder einer am Schleuderstreuer angeordneten oder mitgeführten Einrichtung durchgeführt wird, bestimmt. Hierdurch kann in vorteilhafter Weise bei unbekannten Düngereigenschaften eine automatische Einstellung des Schleuderstreuers realisiert werden.

Weiterhin wird die Einstellung der Einstellparameter eines Schleuderstreuers erreicht durch eine Vorrichtung gemäß dem unabhängigen Anspruch 8.

Weitere Aspekte der Erfindung ergeben sich aus den übrigen Ansprüchen, den Figuren sowie der Beispielsbeschreibung.

Die Zeichnungen zeigen
- Fig.1: schematisch die Einstellprozedur eines Schleuderstreuers, bei dem der horizontale Abwurfwinkel einen Sollwert annehmen muss, ohne dass auf allgemeine, den Dünger charakterisierende Größen, wie die Rutsch-und/oder Flugeigenschaft zurückgegriffen wird und
- Fig.2: in schematischer Darstellung das Einstellen des Schleuderstreuers mit Hilfe allgemeiner Größen, welche das Rutsch- und das Flugverhalten beschreiben.

Typischerweise werden die Einstellparameter für den Nutzer eines Schleuderstreuers für eine gewünschte Arbeitsbreite und einen auszubringenden Dünger vom Hersteller des Schleuderstreuers bekanntgegeben. Hierfür wird der Dünger beispielsweise testweise in einer Messvorrichtung mit einem zu dem Modell des Nutzers identischen Schleuderstreuer ausgebracht und mittels Auffangelementen die Arbeitsbreite und/oder der mittlere horizontale Abwurfwinkel und/oder die Wurfweite für einen Satz von eingestellten Parametern testweise bestimmt. Bei gängigen Düngern und Schleuderstreuern, die seit längerem auf dem Markt erhältlich sind, kann es auch ausreichend sein in einer entsprechenden Datenbank nachzusehen. Auf Basis dieser Daten wird sodann die Einstellung des Schleuderstreuers vorgenommen, wobei hierbei die Art der zumindest einen Schleuderscheibe sowie der Wurfschaufeln, die Schleuderscheibendrehzahl und der Aufgabepunkt, aus einer Fülle von möglichen Einstellwerten und Auswahlmöglichkeiten zu bestimmen und zu wählen sind.

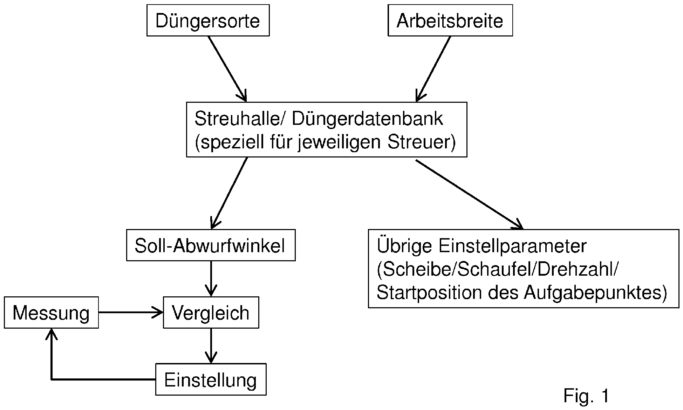

Im in Fig. 1 gezeigten Beispiel werden wie beschrieben für eine spezifische Düngersorte und vorgegebene Arbeitsbreite die Einstellparameter Schleuderscheiben- und Wurfschaufelart und Scheibendrehzahl und ein Startwert für den Aufgabepunkt sowie ein Sollwert für den Abwurfwinkel angegeben. Hierbei dient der Startwert für den Aufgabepunkt als Orientierungshilfe, mit welchem Aufgabepunkt begonnen werden sollte, um den gewünschten Abwurfwinkel und damit die gewünschte Arbeitsbreite zu erhalten. Durch Messung des horizontalen Abwurfwinkels, beispielsweise mittels Radarsensoren, kann nun noch eine Regelung desselben gesteuert werden, um die Arbeitsbreite so präzise wie möglich einstellen zu können. Da eine genaue Vorhersage des Abwurfwinkels schwierig ist, ist es vorteilhaft mittels Sensoren auf eventuelle Abweichungen vom Sollwert durch Änderungen, vorzugsweise des Aufgabepunktes, reagieren zu können. Gründe für die Abweichungen können beispielsweise Ungenauigkeiten in der Vorhersage des Abwurfwinkels aber auch äußere Einflüsse, wie beispielsweise eine Verfälschung des Aufgabepunktes auf Grund einer Neigung bei Streuvorgängen in Hanglage sein. Letzteres könnte beispielsweise auch durch einen geeigneten Neigungssensor statt des Radarsensors erkannt und ausgeglichen werden. Wesentlich in diesem Beispiel ist, dass nach bisher gängiger Vorgehensweise üblicherweise sämtliche Einstellparameter in einer Datenbank nachgeschaut oder bei Dünger- oder Schleuderstreueranbietern individuell für jeden Typ von Schleuderstreuer und für jede Düngersorte erfragt bzw. gemessen werden mussten.

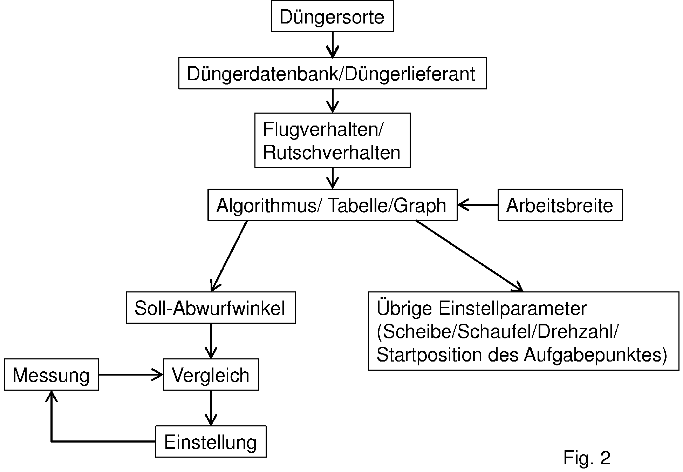

Im Gegensatz dazu wird nun erfindungsgemäß, wie in dem in Fig. 2 gezeigten Verfahren, lediglich auf zwei den Dünger charakterisierende Größen zurückgegriffen. Dies ist in diesem Beispiel zum einen das Rutschverhalten und zum anderen das Flugverhalten, welche die beiden die mittlere Arbeitsbreite und die mittlere Wurfweite bestimmenden Phasen, nämlich das Rutschverhalten auf der Wurfschaufel bzw. der Schleuderscheibe und das Flugverhalten nach dem Verlassen der Wurfschaufel bzw. der Schleuderscheibe, charakterisieren. Im Unterschied zu der Vorgehensweise nach Fig. 1 sind diese beiden Eigenschaften den Dünger charakterisierende Größen, die in keiner Weise von dem Typ des Schleuderstreuer abhängen. Das bedeutet, dass bei entsprechenden Tests und einer entsprechend detaillierten Charakterisierung des Schleuderstreuers lediglich auf Basis dieser beiden Werte die Einstellwerte des Schleuderstreuers bekannt sind und angewendet werden können ohne für diese spezielle Düngersorte aufwändige und zeitintensive Streuversuche durchführen zu müssen. Insbesondere ist für jeden Schleuderstreuer, sofern dieser ausreichend charakterisiert ist, eine Angabe derselben Werte für das Rutsch- und das Flugverhalten ausreichend. Es muss also nur jeweils eine einzige Testmessung des Düngers zur Bestimmung des Rutsch- und des Flugverhaltens, beispielsweise beim Düngerhersteller, durchgeführt werden.

Entsprechend des in Fig. 2 gezeigten Beispiels wird also für eine bestimmte Düngersorte in einer Datenbank oder beim Lieferanten oder Hersteller das Rutsch- und das Flugverhalten des Düngers erfragt, welche dann unter Angabe der gewünschten Arbeitsbreite mittels eines oder mehrerer Algorithmen und/oder Tabellen und/oder Graphen die Einstellwerte des Schleuderstreuers inklusive des Startwertes für des Einleitsystems sowie den Sollwert für den horizontalen Abwurfwinkel liefern. Dieses kann zum einen an einem dem Schleuderstreuer oder einer landwirtschaftlichen Zugmaschine zugeordneten Terminal gespeichert sein und entsprechend abgerufen oder berechnet werden. Die Werte können aber auch durch ein auf einem beliebigen PC und/oder mobilen Endgerät, insbesondere Telefon, installiertes Programm ermittelt werden oder aber vom Hersteller des Düngerstreuers, beispielsweise telefonisch oder über das Internet oder per E-Mail, bereitgestellt werden. Die entsprechenden Einstellwerte werden vorzugsweise vor Beginn des Verteilvorganges am Schleuderstreuer eingestellt und in diesem Beispiel entsprechend Fig. 1 der horizontale Abwurfwinkel mit Hilfe von Sensoren, vorzugsweise Radarsensoren, gemessen, mit dem Sollabwurfwinkel zum Erreichen der Arbeitsbreite verglichen und bei Abweichungen der Einleitpunkt des Streugutes entsprechend nachgeregelt.

Gleichen sich zwei verschiedene Düngertypen im Rutsch- sowie im Flugverhalten zumindest annähernd, so sind die Einstellwerte auch zumindest annähernd gleich einzustellen. Für eine derartige Konstellation wäre nach bisheriger Vorgehensweise erst nach aufwendigen Streuversuchen bekannt, dass die Einstellwerte zumindest annähernd gleich sind.

Darüber hinaus ist es naheliegend durch Untersuchungen Zusammenhänge abzuleiten, welche zur Charakterisierung eines Schleuderstreuers in der Form dienen, dass aus wenigen Streuversuchen mit bestimmten Einstellwerten und Düngern mit bestimmtem Rutsch- und/oder Flugverhalten, der Abwurfwinkel und/oder die Wurfweite für andere Einstellwerte und/oder andere Düngersorten mit anderen Rutsch- und/oder Flugeigenschaften bestimmbar sind, so dass im Vergleich zu der heutigen Vorgehensweise eine weitaus geringere Zahl von Streuversuchen zur Ermittlung der Einstellwerte notwendig wäre. Sofern das Rutsch- und das Flugverhalten eines Düngers mittels zweier Messungen bekannt wäre, wäre für Schleuderstreuer, welche im Hinblick auf diese beiden Werte zumindest annähernd vollständig charakterisiert sind, auch die Wahl aller Einstellwerte des Schleuderstreuers sofort und ohne weitere Testmessungen eindeutig bekannt.

Vorteilhafte Ausgestaltungen, welche sich auf andere Einstellparameter eines Schleuderstreuers als die Vorgenannten beziehen sind selbstverständlich denkbar.

## Patentansprüche

1. Verfahren zur Berechnung von zumindest einem Einstellparameter eines Schleuderstreuers, welcher über mindestens eine Schleuderscheibe verfügt, wobei der zumindest eine Einstellparameter aus einer universellen das Streugut zumindest teilweise charakterisierenden und für beliebige Streugüter bestimmbaren Größe berechnet wird,
**dadurch gekennzeichnet, dass**
zumindest eine der das Streugut charakterisierenden Größen, welche für die Berechnung der Einstellparameter des Schleuderstreuers für die gewünschte Arbeitsbreite verwendet wird, durch geeignete Messung einer oder mehrerer das Flugverhalten des Streugutes charakterisierenden Größen mit Hilfe einer geeigneten Messvorschrift, welche mittels geeigneter Mittel am Schleuderstreuer selbst oder einer am Schleuderstreuer angeordneten Einrichtung durchgeführt wird, bestimmt wird.

2. Verfahren nach Anspruch 1, **dadurch gekennzeichnet, dass** die zu verwendende Schleuderscheibenart sowie Scheibendrehzahl aus einer die Flugeigenschaft des Streugutes charakterisierenden Größe berechnet wird.

3. Verfahren nach Anspruch 1 oder 2, **dadurch gekennzeichnet, dass** Randbedingungen, wie vorzugsweise die gewünschte Arbeitsbreite und/oder die Wurfweite, in die Berechnung miteinfließen.

4. Verfahren nach einem der Ansprüche 1 bis 3 für einen Schleuderstreuer mit mindestens einer Schleuderscheibe sowie einer Verstellvorrichtung des Aufgabepunktes des Streugutes auf die Schleuderscheibe, **dadurch gekennzeichnet, dass** der Aufgabepunkt des Streugutes auf die Schleuderscheibe aus einer die Rutscheigenschaften des Streugutes charakterisierenden Größe berechnet wird.

5. Verfahren nach zumindest einem der vorangegangenen Ansprüche für einen Schleuderstreuer mit mindestens einer Schleuderscheibe sowie einer Verstellvorrichtung des Aufgabepunktes des Streugutes auf die Schleuderscheibe, **dadurch gekennzeichnet, dass** alle Einstellparameter des Schleuderstreuers, wie vorzugsweise Aufgabepunkt des Streuguts auf die Schleuderscheibe, Scheibendrehzahl und Schleuderscheibenart des Schleuderstreuers aus zumindest zwei das Streugut charakterisierenden und für beliebige Streugüter bestimmbaren Größen, welche vorzugsweise die Flugeigenschaft und das Rutschverhalten des Streugutes beschreiben, unter Berücksichtigung der gewünschten Arbeitsbreite berechnet werden.

6. Verfahren nach zumindest einem der vorangegangenen Ansprüche, **dadurch gekennzeichnet, dass** mittels geeigneter Sensoren, wie vorzugsweise Radarsensoren und/oder Ultraschallsensoren und/oder Lasersensoren, mittels welcher durch die Bestimmung des Abwurfwinkels des Streugutes die Arbeitsbreite überwacht wird, der Aufgabepunkt des Streugutes auf die Schleuderscheibe bei Abweichungen der Arbeitsbreite vom gewünschten Wert nachgeregelt wird.

7. Verfahren nach zumindest einem der vorangegangenen Ansprüche, **dadurch gekennzeichnet, dass** zumindest eine der das Streugut charakterisierenden Größen, welche für die Berechnung der Einstellparameter des Schleuderstreuers für die gewünschte Arbeitsbreite verwendet wird, durch geeignete Messung einer oder mehrerer das Rutschverhalten des Streugutes charakterisierenden Größen mit Hilfe einer geeigneten Messvorschrift, welche mittels geeigneter Mittel am Schleuderstreuer selbst oder einer am Schleuderstreuer angeordneten oder mitgeführten Einrichtung durchgeführt wird, bestimmt wird.

8. Vorrichtung zur Einstellung der Einstellparameter eines Schleuderstreuers, welcher über mindestens eine Schleuderscheibe verfügt,
wobei,
der zumindest eine Einstellparameter aus einer universellen das Streugut zumindest teilweise charakterisierenden und für beliebige Streugüter bestimmbaren Größe mit Hilfe eines in einem Speicher eines auf einem dem Schleuderstreuer oder dem Zugfahrzeug, an welchen der Schleuderstreuer angehängt ist, zugeordneten Jobrechner temporär oder dauerhaft gespeicherten Programms berechnet wird,
**dadurch gekennzeichnet, dass**
zumindest eine der das Streugut charakterisierenden Größen, welche für die Berechnung der Einstellparameter des Schleuderstreuers für die gewünschte Arbeitsbreite benötigt wird, durch geeignete Messung einer oder mehrerer das Flugverhalten des Streugutes charakterisierende Größen mit Hilfe einer geeigneten Messvorschrift, welche am Schleuderstreuer selbst oder einer am Schleuderstreuer angeordneten Einrichtung durchgeführt wird, bestimmt wird und mittels geeigneter Mittel ausgegeben und/oder die Einstellmittel entsprechend der neu ermittelten Einstellparameter nachgestellt und/oder nachgeregelt werden.

9. Vorrichtung nach Anspruch 8, **dadurch gekennzeichnet, dass** die zu verwendende Schleuderscheibenart sowie Scheibendrehzahl aus einer die Flugeigenschaft des Streugutes charakterisierenden Größe mittels des abgespeicherten Programms berechnet wird,

10. Vorrichtung nach Anspruch 8 oder 9, **dadurch gekennzeichnet, dass** Randbedingungen, wie vorzugsweise die gewünschte Arbeitsbreite und/oder die Wurfweite, in die Berechnung miteinfließen.

11. Vorrichtung nach zumindest einem der Ansprüche 8 bis 10 für einen Schleuderstreuer mit mindestens einer Schleuderscheibe sowie einer Verstellvorrichtung des Aufgabepunktes des Streugutes auf die Schleuderscheibe,
**dadurch gekennzeichnet, dass** der Aufgabepunkt des Streugutes auf die Schleuderscheibe aus einer die Rutscheigenschaften des Streugutes charakterisierenden Größe mittels des abgespeicherten Programms berechnet wird.

12. Vorrichtung nach zumindest einem der Ansprüche 8 bis 11 für einen Schleuderstreuer mit mindestens einer Schleuderscheibe sowie einer Verstellvorrichtung des Aufgabepunktes des Streugutes auf die Schleuderscheibe,
**dadurch gekennzeichnet, dass** alle Einstellparameter des Schleuderstreuers, wie vorzugsweise Aufgabepunkt des Streuguts auf die Schleuderscheibe, Scheibendrehzahl und Schleuderscheibenart des Schleuderstreuers aus zumindest zwei das Streugut charakterisierenden und für beliebige Streugüter bestimmbaren Größen, welche vorzugsweise die Flugeigenschaft und/oder das Rutschverhalten des Streugutes beschreiben, unter Berücksichtigung der gewünschten Arbeitsbreite mittels des abgespeicherten Programms berechnet werden.

13. Vorrichtung nach zumindest einem der Ansprüche 8 bis 12, **dadurch gekennzeichnet, dass** mittels geeigneter Sensoren, vorzugsweise Radarsensoren und/oder Ultraschallsensoren und/oder Lasersensoren, mittels welcher durch die Bestimmung des Abwurfwinkels des Streugutes die Arbeitsbreite überwacht wird, der Aufgabepunkt des Streugutes auf die Schleuderscheibe gesteuert und bei Abweichungen der Arbeitsbreite vom gewünschten Wert die entsprechenden Nachregelwerte mittels des abgespeicherten Programms ermittelt und/oder berechnet und entsprechend angewendet werden.

14. Vorrichtung nach zumindest einem der vorangegangenen Ansprüche 8 bis 13, **dadurch gekennzeichnet, dass** zumindest eine der das Streugut charakterisierenden Größen, welche für die Berechnung der Einstellparameter des Schleuderstreuers für die gewünschte Arbeitsbreite benötigt wird, durch geeignete Messung einer oder mehrerer das Rutschverhalten des Streugutes charakterisierende Größen mit Hilfe einer geeigneten Messvorschrift, welche am Schleuderstreuer selbst oder einer am Schleuderstreuer angeordneten oder mitgeführten Einrichtung durchgeführt wird, bestimmt wird und mittels geeigneter Mittel ausgegeben und/oder die Einstellmittel entsprechend der neu ermittelten Einstellparameter nachgestellt und/oder nachgeregelt werden.

## Claims

1. Method for calculating at least one adjusting parameter of a centrifugal spreader which has at least one spreader disc, the at least one adjusting parameter being calculated from a universal variable at least partly characterizing the spread material and determinable for any desired spread materials,
**characterized in that**
at least one of the variables that characterizes the spread material, which is used for the calculation of the adjusting parameters of the centrifugal spreader for the desired working width, is determined by suitable measurement of one or more variables characterizing the flight behaviour of the spread material with the aid of a suitable measuring rule, which measurement is carried out by means of suitable means on the centrifugal spreader itself or a device arranged on the centrifugal spreader.

2. Method according to Claim 1, **characterized in that** the centrifugal disc type and centrifugal rotational speed to be used are calculated from a variable characterizing the flight characteristic of the spread material.

3. Method according to Claim 1 or 2, **characterized in that** boundary conditions, such as preferably the desired working width and/or the projection range, are incorporated in the calculation.

4. Method according to one of Claims 1 to 3 for a centrifugal spreader having at least one spreader disc and a displacement device of the drop point of the spread material onto the spreader disc, **characterized in that** the drop point of the spread material onto the spreader disc is calculated from a variable characterizing the sliding properties of the spread material.

5. Method according to at least one of the preceding claims for a centrifugal spreader having at least one spreader disc and a displacement device of the drop point of the spread material onto the spreader disc, **characterized in that** all the adjusting parameters of the centrifugal spreader, such as preferably drop point of the spread material onto the spreader disc, disc rotational speed and spreader disc type of the centrifugal spreader, are calculated from at least two variables characterizing the spread material and determinable for any desired spread materials, which preferably describe the flight characteristic and the sliding behaviour of the spread material, whilst taking the desired working width into account.

6. Method according to at least one of the preceding claims, **characterized in that** by means of suitable sensors, such as preferably radar sensors and/or ultrasonic sensors and/or laser sensors, by means of which the working width is monitored during the determination of the discharge angle of the spread material, the drop point of the spread material onto the spreader disc is readjusted in the event of deviations of the working width from the desired value.

7. Method according to at least one of the preceding claims, **characterized in that** at least one of the variables characterising the spread material, which is used for the calculation of the adjusting parameters of the centrifugal spreader for the desired working width, is determined by suitable measurement of one or more variables characterizing the sliding behaviour of the spread material with the aid of a suitable measuring rule, which measurement is carried out by means of suitable means on the centrifugal spreader itself or a device arranged or carried along on the centrifugal spreader.

8. Device for adjusting the adjusting parameters of a centrifugal spreader which has at least one spreader disc,
the at least one adjusting parameter being calculated from a universal variable at least partly characterizing the spread material and determinable for any desired spread materials with the aid of a program temporarily or permanently stored in a memory of a job computer assigned to the centrifugal spreader or to the traction vehicle to which the centrifugal spreader is attached,
**characterized in that**
at least one of the variables characterizing the spread material, which is needed for the calculation of the adjusting parameters of the centrifugal spreader for the desired working width, is determined by suitable measurement of one or more variables characterizing the flight behaviour of the spread material with the aid of a suitable measuring rule, which measurement is carried out on the centrifugal spreader itself or a device arranged on the centrifugal spreader, and is output by means of suitable means and/or the adjusting means are reset and/or readjusted in accordance with the newly determined adjusting parameters.

9. Device according to Claim 8, **characterized in that** the spreader disc type and spreader disc rotational speed to be used are calculated by means of the stored program from a variable characterizing the flight characteristic of the spread material.

10. Device according to Claim 8 or 9, **characterized in that** boundary conditions, such as preferably the desired working width and/or the projection range, are incorporated in the calculation.

11. Device according to at least one of Claims 8 to 10 for a centrifugal spreader having at least one spreader disc and a displacement device of the drop point of the spread material onto the spreader disc, **characterized in that** the drop point of the spread material onto the spreader disc is calculated by means of a stored program from a variable characterizing the sliding properties of the spread material.

12. Device according to at least one of Claims 8 to 11 for a centrifugal spreader having at least one spreader disc and a displacement device of the drop point of the spread material onto the spreader disc, **characterized in that** the adjusting parameters of the centrifugal spreader, such as preferably drop point of the spread material onto the spreader disc, disc rotational speed and spreader disc type of the centrifugal spreader, are calculated by means of the stored program from at least two variables characterizing the spread material and determinable for any desired spread materials, which preferably describe the flight characteristic and/or the sliding behaviour of the spread material, whilst taking the desired working width into account.

13. Device according to at least one of Claims 8 to 12, **characterized in that** by means of suitable sensors, preferably radar sensors and/or ultrasonic sensors and/or laser sensors, by means of which the working width is monitored during the determination of the discharge angle of the spread material, the drop point of the spread material onto the spreader disc is controlled and, in the event of deviations of the working width from the desired value, the corresponding readjustment values are determined and/or calculated by means of the stored program and applied accordingly.

14. Device according to at least one of the preceding Claims 8 to 13, **characterized in that** at least one of the variables characterizing the spread material, which is needed for the calculation of the adjusting parameters of the centrifugal spreader for the desired working width, is determined by suitable measurement of one or more variables characterizing the sliding behaviour of the spread material with the aid of a suitable measuring rule, which measurement is carried out on the centrifugal spreader itself or a device arranged or carried on the centrifugal spreader, and is output by means of suitable means and/or the adjusting means are reset and/or readjusted in accordance with the newly determined adjusting parameters.

## Revendications

1. Procédé de calcul d'au moins un paramètre de réglage d'un épandeur centrifuge, lequel dispose d'au moins un disque centrifuge, l'au moins un paramètre de réglage étant calculé à partir d'une grandeur universelle qui caractérise au moins partiellement le produit d'épandage et pouvant être déterminée pour des produits d'épandage quelconques,
**caractérisé en ce que**
au moins l'une des grandeurs qui caractérisent le produit d'épandage, qui est utilisée pour le calcul des paramètres de réglage de l'épandeur centrifuge pour la largeur de travail souhaitée, est déterminée par une mesure appropriée d'une ou plusieurs grandeurs qui caractérisent le comportement de vol du produit d'épandage à l'aide d'une consigne de mesure appropriée, laquelle est exécutée à l'aide de moyens appropriés sur l'épandeur centrifuge lui-même ou d'un dispositif disposé sur l'épandeur centrifuge.

2. Procédé selon la revendication 1, **caractérisé en ce que** le type de disque centrifuge à utiliser ainsi que la vitesse de rotation du disque sont calculés à partir d'une grandeur qui caractérise la propriété de vol du produit d'épandage.

3. Procédé selon la revendication 1 ou 2, **caractérisé en ce que** des conditions aux limites, comme de préférence la largeur de travail souhaitée et/ou la distance de projection, interviennent dans le calcul.

4. Procédé selon l'une des revendications 1 à 3 pour un épandeur centrifuge comprenant au moins un disque centrifuge ainsi qu'un arrangement de positionnement du point de chute du produit d'épandage sur le disque centrifuge, **caractérisé en ce que** le point de chute du produit d'épandage sur le disque centrifuge est calculé à partir d'une grandeur qui caractérise les propriétés de glissement du produit d'épandage.

5. Procédé selon au moins l'une des revendications précédentes pour un épandeur centrifuge comprenant au moins un disque centrifuge ainsi qu'un arrangement de positionnement du point de chute du produit d'épandage sur le disque centrifuge, **caractérisé en ce que** tous les paramètres de réglage de l'épandeur centrifuge, comme de préférence le point de chute du produit d'épandage sur le disque centrifuge, la vitesse de rotation du disque et le type de disque centrifuge de l'épandeur centrifuge sont calculés, en tenant compte de la largeur de travail souhaitée, à partir d'au moins deux grandeurs qui caractérisent le produit d'épandage et pouvent être déterminées pour des produits d'épandage quelconques, lesquelles décrivent de préférence la propriété de vol et le comportement de glissement du produit d'épandage.

6. Procédé selon au moins l'une des revendications précédentes, **caractérisé en ce que** le point de chute du produit d'épandage sur le disque centrifuge est rattrapé en cas d'écarts de la largeur de travail par rapport à la valeur souhaitée au moyen de capteurs appropriés, comme de préférence des capteurs radar et/ou des capteurs à ultrasons et/ou des capteurs laser, au moyen desquels la largeur de travail est surveillée en déterminant l'angle d'éjection du produit d'épandage.

7. Procédé selon au moins l'une des revendications précédentes, **caractérisé en ce qu'**au moins l'une des grandeurs qui caractérisent le produit d'épandage, laquelle est utilisée pour le calcul des paramètres de réglage de l'épandeur centrifuge pour la largeur de travail souhaitée, est déterminée par une mesure appropriée d'une ou plusieurs grandeurs qui caractérisent le comportement de glissement du produit d'épandage à l'aide d'une consigne de mesure appropriée, laquelle est exécutée à l'aide de moyens appropriés sur l'épandeur centrifuge lui-même ou d'un dispositif emporté ou disposé sur l'épandeur centrifuge.

8. Arrangement de réglage des paramètres de réglage d'un épandeur centrifuge, lequel dispose d'au moins un disque centrifuge,
l'au moins un paramètre de réglage étant calculé à partir d'une grandeur universelle qui caractérise au moins partiellement le produit d'épandage et pouvant être déterminée pour des produits d'épandage quelconques à l'aide d'un programme enregistré temporairement ou de manière permanente dans une mémoire d'un ordinateur de tâche associé à l'épandeur centrifuge ou au véhicule tracteur auquel est attelé l'épandeur centrifuge,
**caractérisé en ce que**
au moins l'une des grandeurs qui caractérisent le produit d'épandage, qui est nécessaire pour le calcul des paramètres de réglage de l'épandeur centrifuge pour la largeur de travail souhaitée, est déterminée par une mesure appropriée d'une ou plusieurs grandeurs qui caractérisent le comportement de vol du produit d'épandage à l'aide d'une consigne de mesure appropriée, laquelle est exécutée sur l'épandeur centrifuge lui-même ou sur un dispositif disposé sur l'épandeur centrifuge, puis délivrée à l'aide de moyens appropriés et/ou les moyens de réglage sont réajustés et/ou rattrapés en fonction des nouveaux paramètres de réglage déterminés.

9. Arrangement selon la revendication 8, **caractérisé en ce que** le type de disque centrifuge à utiliser ainsi que la vitesse de rotation du disque sont calculés au moyen du programme enregistré à partir d'une grandeur qui caractérise la propriété de vol du produit d'épandage.

10. Arrangement selon la revendication 8 ou 9, **caractérisé en ce que** des conditions aux limites, comme de préférence la largeur de travail souhaitée et/ou la distance de projection, interviennent dans le calcul.

11. Arrangement selon au moins l'une des revendications 8 à 10 pour un épandeur centrifuge comprenant au moins un disque centrifuge ainsi qu'un arrangement de positionnement du point de chute du produit d'épandage sur le disque centrifuge, **caractérisé en ce que** le point de chute du produit d'épandage sur le disque centrifuge est calculé au moyen du programme enregistré à partir d'une grandeur qui caractérise les propriétés de glissement du produit d'épandage.

12. Arrangement selon au moins l'une des revendications 8 à 11 pour un épandeur centrifuge comprenant au moins un disque centrifuge ainsi qu'un arrangement de positionnement du point de chute du produit d'épandage sur le disque centrifuge, **caractérisé en ce que** tous les paramètres de réglage de l'épandeur centrifuge, comme de préférence le point de chute du produit d'épandage sur le disque centrifuge, la vitesse de rotation du disque et le type de disque centrifuge de l'épandeur centrifuge sont calculés au moyen du programme enregistré, en tenant compte de la largeur de travail souhaitée, à partir d'au moins deux grandeurs qui caractérisent le produit d'épandage et peuvent être déterminées pour des produits d'épandage quelconques, lesquelles décrivent de préférence la propriété de vol et/ou le comportement de glissement du produit d'épandage.

13. Arrangement selon au moins l'une des revendications 8 à 12, **caractérisé en ce que** le point de chute du produit d'épandage sur le disque centrifuge est commandé au moyen de capteurs appropriés, comme de préférence des capteurs radar et/ou des capteurs à ultrasons et/ou des capteurs laser, au moyen desquels la largeur de travail est surveillée en déterminant l'angle d'éjection du produit d'épandage, et en cas d'écarts de la largeur de travail par rapport à la valeur souhaitée, les valeurs de rattrapage correspondantes sont déterminées et/ou calculées au moyen du programme enregistré et appliquées en conséquence.

14. Arrangement selon au moins l'une des revendications précédentes 8 à 13, **caractérisé en ce qu'**au moins l'une des grandeurs qui caractérisent le produit d'épandage, laquelle est nécessaire pour le calcul des paramètres de réglage de l'épandeur centrifuge pour la largeur de travail souhaitée, est déterminée par une mesure appropriée d'une ou plusieurs grandeurs qui caractérisent le comportement de glissement du produit d'épandage à l'aide d'une consigne de mesure appropriée, laquelle est exécutée sur l'épandeur centrifuge lui-même ou sur un dispositif emporté ou disposé sur l'épandeur centrifuge, puis délivrée à l'aide de moyens appropriés et/ou les moyens de réglage sont réajustés et/ou rattrapés en fonction des nouveaux paramètres de réglage déterminés.
